# EUROPÄISCHE PATENTANMELDUNG

(11) **EP 2 372 253 A2**
(43) Veröffentlichungstag der Anmeldung: **05.10.2011**
(21) Anmeldenummer: 11157621.1
(22) Anmeldetag: 10.03.2011
(51) Int. Cl.: F24C 15/04

(54) **Tür für ein Hausgerät sowie Hausgerät mit einer derartigen Tür**

(30) Priorität: 31.03.2010 ES 201030496
(71) Anmelder: BSH Bosch und Siemens Hausgeräte GmbH, 81739 München (DE)
(72) Erfinder: Esteban Corton, Luis Antonio, 50007, Zaragoza (ES); Esteras Duce, Ignacio, 50010, Zaragoza (ES); Romeo Gimenez, Daniel, 50010, Zaragoza (ES)

(57) **Zusammenfassung**

Die Erfindung betrifft eine Tür für ein Hausgerät (1) mit einer Türplatte (12), welche zumindest bereichsweise durchsichtig ausgebildet ist, wobei an Teilbereichen der Innenseite (14) der Türplatte (12) ein die Durchsicht verhinderndes Material (16) ausgebildet ist und an der der Türplatte (12) abgewandten Seite des Materials (16) ein Abdeckelement (17) angeordnet ist.

## Beschreibung

Die Erfindung betrifft eine Tür für ein Hausgerät mit einer Türplatte, welche zumindest bereichsweise durchsichtig ausgebildet ist. Darüber hinaus betrifft die Erfindung auch ein Hausgerät zum Zubereiten von Lebensmitteln mit einer derartigen Tür.

Hausgeräte zum Zubereiten von Lebensmitteln, wie beispielsweise ein Backofen, weisen einen Garraum auf, der durch eine Tür verschließbar ist. Die Tür weist als Türplatte zumindest eine aus Glas oder einem Glasmaterial ausgebildete Frontscheibe auf. Die Tür kann darüber hinaus auch zumindest eine zweite derartige Platte aufweisen, welche als Innenscheibe genannt ist. Bei Backöfen, die auch für den Pyrolysebetrieb ausgebildet sind, kann auch eine Tür mit zumindest drei derartigen Türscheiben vorgesehen sein.

Zum Betrachten des Garraums bei geschlossener Tür sind diese Türplatten zumindest bereichsweise durchsichtig ausgebildet. Um darüber hinaus dieses Sichtfenster durch eine Türplatte zu begrenzen, wird insbesondere bei der Frontscheibe innenseitig ein undurchsichtiger Emaillelack aufgebracht. Durch eine derartige Vorgehensweise bei der Begrenzung des Sichtfensters und der Aufbringung des Emaillematerials zur Erzeugung von undurchsichtigen Bereichen, ist der Einsatzbereich beschränkt. Gerade im Hinblick auf die unterschiedliche Farbgebung des durch die Materialaufbringung als undurchsichtig ausgebildeten Teilbereichs ist der Einsatzbereich dadurch eingeschränkt. Darüber hinaus ist das Emaillematerial sehr kostenintensiv.

Es ist Aufgabe der vorliegenden Erfindung, eine Tür für ein Hausgerät sowie ein Hausgerät mit einer derartigen Tür zu schaffen, mit welcher beziehungsweise bei welchem die Darstellung des durch die Materialaufbringung undurchsichtig erzeugten Teilbereichs an der Türplatte flexibler und auch verschleißarm ausgebildet werden kann.

Diese Aufgabe wird durch eine Tür, welche die Merkmale nach Anspruch 1 aufweist, und ein Hausgerät, welches die Merkmale nach Anspruch 14 aufweist, gelöst.

Eine erfindungsgemäße Tür für ein Hausgerät umfasst zumindest eine Türplatte, welche zumindest bereichsweise durchsichtig ausgebildet ist. An Teilbereichen der Innenseite der Türplatte ist ein die Durchsicht verhinderndes Material ausgebildet. An der der Türplatte abgewandten Seite des Materials ist darüber hinaus zusätzlich ein Abdeckelement angeordnet. Durch dieses zusätzliche Bauteil, nämlich das Abdeckelement, kann das die Durchsicht verhindernde Material sicherer vor Verkratzung oder sonstigem Verschleiß positioniert werden. Das Abdeckelement dient somit insbesondere als Verschleißschutz. Darüber hinaus wird durch eine derartige Ausgestaltung der Tür auch eine flexiblere Verwendung unterschiedlicher die Durchsicht verhindernder Materialien gewährleistet.

Besonders vorteilhaft ist es, wenn das die Durchsicht durch die Türplatte verhindernde Material emaillefrei ausgebildet ist.

Besonders vorteilhaft ist es, wenn dieses die Durchsicht verhindernde Material ein organisches Material ist. Dies ist im Vergleich zu einem Emaillematerial, welches ein anorganisches Material ist, eine völlig unterschiedliche Materialausgestaltung, welche ganz unterschiedliche Gestaltungs- und Ausbildungsmöglichkeiten gewährleistet. Insbesondere ist somit die Aufbringung des Materials und die Farbdarstellung durch das die Durchsicht verhindernden Materials wesentlich flexibler.

In besonders bevorzugter Weise ist das die Durchsicht verhindernde Material ein Epoxidmaterial. Dies ist im Hinblick auf die Aufbringung auf der Türplatte ein sehr vorteilhaftes Material. Darüber hinaus kann mit diesem Material eine besonders variable und flexible Farbpräsentation dieses dadurch nicht durchsichtig erzeugten Teilbereichs ermöglicht werden. Gerade bei frontseitiger Betrachtung der Tür kann somit eine ganz spezielle Farbgebung ermöglicht werden. Insbesondere wird dadurch erreicht, dass durch dieses spezifische Material bei frontseitiger Betrachtung der Tür ein metallischer Eindruck, insbesondere ein Chrommaterialeindruck vermittelt wird. Es kann somit in technischer Hinsicht durch eine derartig spezifische Materialaufbringung an der Innenseite der Abdeckplatte ein Eindruck erweckt werden, als wäre an dieser Innenseite explizit ein chromfarbenes Bauteil an der Türplatte angeordnet, wobei jedoch nur eine entsprechend den Farbeindruck vermittelnde Beschichtung aufgebracht ist. Durch eine derartige Ausgestaltung kann somit durch eine sehr einfache Materialaufbringung eine explizite Anbringung eines derartigen chromfarbenen gegenständlichen Bauteils vermieden werden, wodurch Kosten und Bauteile eingespart werden. Dies ist auch mit einer Materialbeschichtung mit Emaille nicht möglich.

Vorzugsweise ist das die Durchsicht verhindernde Material als eine Beschichtung auf der Innenseite der Türplatte aufgebracht.

Insbesondere ist das Material als umlaufender Rahmen und bis zu den Rändern der Türplatte hinaus ausgebildet.

Vorzugsweise ist das Abdeckelement form- und flächenmäßig an die durch das aufgebrachte Material erzeugte Form angepasst, insbesondere ist die Fläche der Innenseite der Türplatte, welche mit dem die Durchsicht verhindernden Material ausgebildet ist, durch die Fläche des Abdeckelements bei rückseitiger Betrachtung der Tür vollständig bedeckt. Die Größe des Abdeckelements ist daher so bemessen, dass sie zumindest die Größe der Fläche, die mit dem Material beschichtet ist, aufweist und diesbezüglich deckungsgleich angeordnet ist. Durch eine derartige Ausgestaltung kann ein besonders effizienter Schutz dieser Schicht vor Verkratzen oder sonstigem Verschleiß ermöglicht werden. Da gerade ein Epoxidmaterial im Vergleich zu einem Emaillematerial einen entsprechenden Verschleißschutz vorteilhaft benötigt, kann somit gerade in Kombination mit diesem spezifischen Material eine ganz individuelle Farbgebung und eine damit einher gehende Bauteilreduzierung erreicht werden, andererseits dieses relativ empfindliche Material ausreichend vor Verschleiß geschützt werden.

Vorzugsweise ist das Abdeckelement einstückig ausgebildet. Insbesondere ist dieses Abdeckelement aus Kunststoff oder Metall ausgebildet.

In besonders vorteilhafter Weise ist vorgesehen, dass das Abdeckelement bis auf die Befestigungsbereiche, an denen es an der Innenseite der Tür befestigt ist, beabstandet zum Material, welches die Durchsicht verhindert, und/oder zur Innenseite beabstandet angeordnet ist. Vorzugsweise ist in diesem Zusammenhang ein Abstand größer 0,7 mm, insbesondere ein Abstand zwischen 0,8 mm und 2 mm vorgesehen. Durch diese Beabstandung wird ein direkter Kontakt des Abdeckelements mit dem die Durchsicht verhindernden Material verhindert, so dass auch das Abdeckelement dieses Material beziehungsweise die Beschichtung nicht beschädigen kann.

Vorzugsweise ist das Abdeckelement an Stellen an der Innenseite der Türplatte befestigt, die frei von dem die Durchsicht verhindernden Material sind. Dadurch kann auch durch die Befestigungsstellen und insbesondere das dazu verwendete Material kein Verschleiß dieser die Durchsicht verhindernden Materialschicht auftreten.

Vorzugsweise ist vorgesehen, dass das Abdeckelement an der Innenseite der Tür angeklebt ist. Beispielsweise können hier einzelne Klebestellen in Form von Klebepunkten oder kleinen Klebelinien vorgesehen sein. Beispielsweise kann als Klebstoff hier ein Silikonklebstoff verwendet werden. Ebenso ist es möglich, dass zum Ankleben ein beidseitig klebendes Klebeband verwendet wird.

Vorzugsweise ist die Türplatte eine Frontplatte, insbesondere eine aus Glas oder glasartigem Material ausgebildete Frontplatte und somit auch eine Frontscheibe der Tür. Es kann vorgesehen sein, dass die Tür zumindest zwei derartige Türplatten in Form von Glasscheiben aufweist und in diesem Zusammenhang eine Frontscheibe und eine Innenscheibe umfasst. Zwischen diesen beiden Scheiben kann zumindest eine weitere Zwischenscheibe als dritte Scheibe angeordnet sein.

Des Weiteren betrifft die Erfindung ein Hausgerät zum Zubereiten von Lebensmitteln, insbesondere einen Backofen, welcher eine erfindungsgemäße Tür und eine vorteilhafte Ausgestaltung davon aufweist, wobei die Tür zum Verschließen eines Garraums angeordnet ist.

Ein Ausführungsbeispiel der Erfindung wird nachfolgend anhand schematischer Zeichnungen näher erläutert. Es zeigen:
- Fig.1: eine perspektivische Darstellung eines Ausführungsbeispiels eines erfindungsgemäßen Hausgeräts;
- Fig. 2: eine Ansicht auf die Innenseite der Türplatte der Tür des Hausgeräts gemäß Fig. 1; und
- Fig. 3: eine Seitenansicht der Darstellung gemäß Fig. 2.

In den Figuren werden gleiche oder funktionsgleiche Elemente mit den gleichen Bezugszeichen versehen.

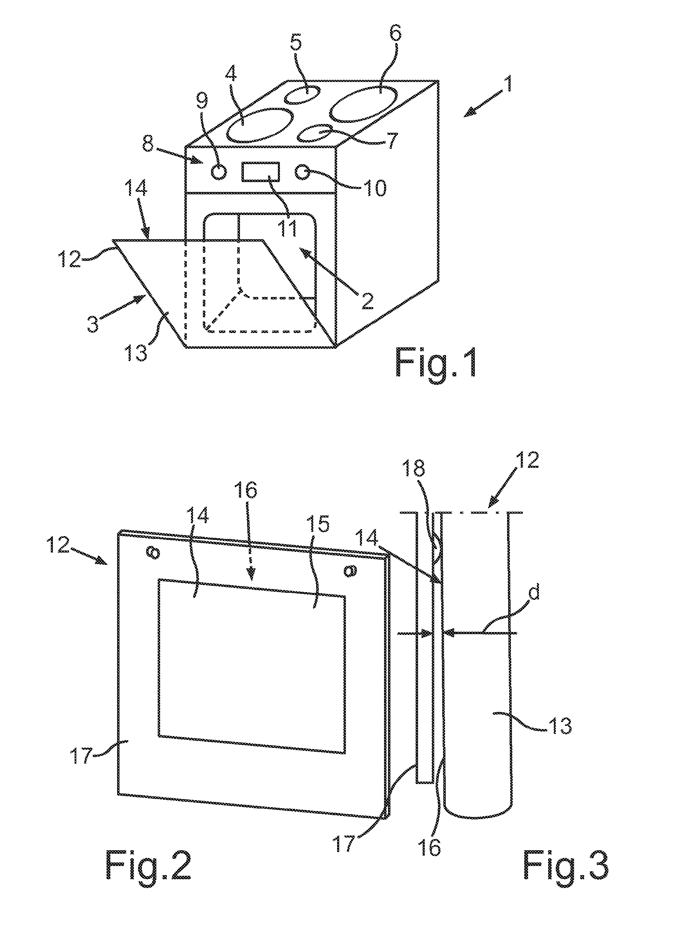

In Fig. 1 ist in einer vereinfachten perspektivischen Darstellung ein Backofen 1 gezeigt, welcher einen Garraum 2 zum Zubereiten von Lebensmitteln aufweist. Der Garraum 2 weist frontseitig eine Beschickungsöffnung auf, welche durch eine Tür 3 verschließbar ist. Darüber hinaus umfasst der Backofen 1 Kochzonen 4, 5, 6 und 7. Frontseitig ist im Ausführungsbeispiel oberhalb der Tür 3 eine Bedienvorrichtung 8 mit beispielhaft ausgebildeten Bedienelementen 9 und 10 und einer Anzeigeeinheit 11 dargestellt. Sowohl die Position der Bedienvorrichtung 8 als auch die Anzahl und Position der Bedienelemente 9 und 10 als auch der Anzeigeeinheit 11 ist lediglich beispielhaft.

Die Tür 3 ist derart ausgebildet, dass sie zumindest eine Türplatte aufweist. Die Türplatte ist im Ausführungsbeispiel eine Frontscheibe 12 und somit eine Platte, die aus Glas oder einem glasartigen Material ausgebildet ist. Vorzugsweise kann vorgesehen sein, dass die Tür 3 zumindest eine weitere Türplatte in Form einer derartigen Scheibe aufweist, die dann zusätzlich zur Frontscheibe 12 als Innenscheibe angeordnet ist und somit bei geschlossener Tür 3 dem Garraum 2 näher positioniert ist. Ist der Backofen 1 zum Pyrolysebetrieb ausgebildet, so ist vorzugsweise vorgesehen, dass zumindest eine dritte derartige Türplatte als Zwischenscheibe zwischen der Frontscheibe 12 und der Innenscheibe ausgebildet ist.

Die Frontscheibe 12 weist eine Außenseite 13 und eine dem Garraum zugewandte Innenseite 14 auf.

In Fig. 2 ist eine vereinfachte Darstellung der Frontscheibe 12 gezeigt, wobei dabei eine Ansicht auf die Innenseite 14 gezeigt ist. Die Frontscheibe 12 ist zumindest bereichsweise durchsichtig ausgebildet. Dazu ist ein Sichtfenster 15 realisiert. Das Sichtfenster 15 ist durch einen Rahmen 16 begrenzt. Dieser Rahmen 16 ist dadurch ausgebildet, dass auf die Innenseite 14 eine Beschichtung aus einem die Durchsicht verhindernden Material ausgebildet ist, wobei dieses Material im Ausführungsbeispiel emaillefrei ausgebildet ist und darüber hinaus ein Epoxidmaterial ist. Die Beschichtung ist in Form eines umlaufenden Rahmens 16 ausgebildet, welcher sich bis zu den äußeren Rändern der Frontscheibe 12 erstreckt.

Auf diese Innenseite der Frontscheibe 12 ist darüber hinaus ein gegenständiges Abdeckelement 17, welches aus Kunststoff oder aus Metall ausgebildet sein kann, aufgebracht. Dieses Abdeckelement 17 ist als plattenartiger Rahmen konzipiert. Das Abdeckelement 17 weist form- und flächenmäßig eine Ausgestaltung auf, die genau demjenigen Teilbereich auf der Innenseite 14 entspricht, der durch das die Durchsicht verhindernde Material, nämlich das Epoxidmaterial, beschichtet ist. Dieses Epoxidmaterial ist somit auf der der Innenseite 14 abgewandten Seite vollständig durch das Abdeckelement 17 bedeckt.

In Fig. 3 ist in einer Seitenansicht ein Teil der Ausgestaltung und Darstellung von Fig. 2 gezeigt. Es ist zu erkennen, dass das Abdeckelement 17 in demjenigen Bereich, in dem das die Durchsicht verhindernde Material 16 auf die Innenseite 14 aufgebracht ist, beabstandet zu diesem Material und somit auch zur Frontscheibe 12 angeordnet ist. Es ist diesbezüglich ein Abstand d ausgebildet, der vorzugsweise größer 0,7 mm, insbesondere 0,8 mm beträgt.

Im Ausführungsbeispiel ist das Abdeckelement 17 an die Innenseite 14 angeklebt. Wesentlich ist dabei auch, dass die Befestigungsstellen in Form der Klebestellen an denjenigen Orten ausgebildet sind, an denen kein das die Durchsicht verhindernde Material gemäß der Form des Rahmens 16 ausgebildet ist. Beispielhaft ist eine Klebestelle 18 gezeigt. Es kann vorgesehen sein, dass in diesem Zusammenhang ein Silikonklebstoff verwendet wird. Alternativ kann auch vorgesehen sein, dass das Abdeckelement 17 durch ein beidseitig klebendes Klebeband an der Innenseite 14 angeklebt ist. Alternativ zum Ankleben kann jedoch auch eine anderweitige Befestigungsmöglichkeit vorgesehen sein. Auch hier ist insbesondere vorgesehen, dass die Befestigung an denjenigen Stellen erfolgt, an denen kein das die Durchsicht verhindernde Material 16 vorhanden ist. Beispielsweise kann hier auch eine Verschraubung oder dergleichen vorgesehen sein.

### Bezugszeichenliste

- 1: Backofen
- 2: Garraum
- 3: Tür
- 4, 5, 6, 7: Kochzonen
- 8: Bedienvorrichtung
- 9, 10: Bedienelemente
- 11: Anzeigeeinheit
- 12: Frontscheibe
- 13: Außenseite
- 14: Innenseite
- 15: Sichtfenster
- 16: Rahmen/Material
- 17: Abdeckelement
- 18: Klebestelle
- d: Abstand

## Patentansprüche

1. Tür für ein Hausgerät (1) mit einer Türplatte (12), welche zumindest bereichsweise durchsichtig ausgebildet ist, **dadurch gekennzeichnet, dass** an Teilbereichen der Innenseite (14) der Türplatte (12) ein die Durchsicht verhinderndes Material (16) ausgebildet ist und an der der Türplatte (12) abgewandten Seite des Materials (16) ein Abdeckelement (17) angeordnet ist.

2. Tür nach Anspruch 1, **dadurch gekennzeichnet, dass** das Material (16) emaillefrei ausgebildet ist.

3. Tür nach Anspruch 1 oder 2, **dadurch gekennzeichnet, dass** das Material (16) ein organisches Material ist.

4. Tür nach einem der vorhergehenden Ansprüche, **dadurch gekennzeichnet, dass** das Material (16) ein Epoxidmaterial ist.

5. Tür nach einem der vorhergehenden Ansprüche, **dadurch gekennzeichnet, dass** das Material (16) als eine Beschichtung auf die Innenseite (14) aufgebracht ist.

6. Tür nach einem der vorhergehenden Ansprüche, **dadurch gekennzeichnet, dass** das Material (16) als umlaufender Rahmen und bis zu den Rändern der Türplatte (12) ausgebildet ist.

7. Tür nach einem der vorhergehenden Ansprüche, **dadurch gekennzeichnet, dass** das Abdeckelement (17) form- und flächenmäßig an die durch das aufgebrachte Material (16) erzeugte Flächenform angepasst ist, insbesondere die Fläche der Innenseite (14) der Türplatte (12), welche mit dem Material (16) ausgebildet ist, durch die Fläche des Abdeckelements (17) vollständig bedeckt ist.

8. Tür nach einem der vorhergehenden Ansprüche, **dadurch gekennzeichnet, dass** das Abdeckelement (17) einstückig ausgebildet ist.

9. Tür nach einem der vorhergehenden Ansprüche, **dadurch gekennzeichnet, dass** das Abdeckelement (17) aus Kunststoff oder Metall ausgebildet ist.

10. Tür nach einem der vorhergehenden Ansprüche, **dadurch gekennzeichnet, dass** das Abdeckelement (17) beabstandet zum Material (16) angeordnet ist, insbesondere in einem Abstand (d) größer 0,7 mm, insbesondere zwischen 0,8 mm und 2 mm.

11. Tür nach einem der vorhergehenden Ansprüche, **dadurch gekennzeichnet, dass** das Abdeckelement (17) an Stellen an der Innenseite (14) befestigt ist, die frei von dem die Durchsicht verhindernden Material (16) sind.

12. Tür nach einem der vorhergehenden Ansprüche, **dadurch gekennzeichnet, dass** das Abdeckelement (17) an der Innenseite (14) der Tür (3) angeklebt ist.

13. Tür nach einem der vorhergehenden Ansprüche, **dadurch gekennzeichnet, dass** die Türplatte eine Frontscheibe (12), insbesondere aus Glas oder glasartigen Material, ist.

14. Hausgerät zum Zubereiten von Lebensmitteln, insbesondere Backofen (1), mit einer Tür (3) nach einem der vorhergehenden Ansprüche, welche zum Verschließen eines Garraums (2) angeordnet ist.
